(19) Europäisches Patentamt
European Patent Office
Office européen des brevets

(11) Veröffentlichungsnummer: **0 078 044**
**A1**

(12) # EUROPÄISCHE PATENTANMELDUNG

(21) Anmeldenummer: 82109824.1

(22) Anmeldetag: 25.10.82

(51) Int. Cl.³: C 08 G 77/56
C 08 G 77/38, C 08 L 83/04

(30) Priorität: 26.10.81 DE 3142419

(43) Veröffentlichungstag der Anmeldung:
04.05.83 Patentblatt 83/18

(84) Benannte Vertragsstaaten:
BE CH DE FR GB IT LI NL

(71) Anmelder: WACKER-CHEMIE GMBH
Prinzregentenstrasse 22
D-8000 München 22(DE)

(72) Erfinder: Graf, Werner, Dr.
Ludwig-Thoma-Strasse 21
D-8263 Burghausen(DE)

(72) Erfinder: Frey, Volker, Dr.
Asternweg 7a
D-8263 Burghausen(DE)

(72) Erfinder: Röse, Hans-Gunter
Alt-Godshorn 79a
D-3012 Langenhagen 7(DE)

(54) **Verfahren zur Herstellung von festen Gebilden aus Umsetzungsprodukten von organischen Siliciumverbindungen mit Borverbindungen.**

(57) Feste Formkörper, Überzüge oder Füllungen von Hohlräumen werden dadurch hergestellt, daß das Umsetzungsprodukt von mindestens 3 Siliciumatome je Molekül sowie SiOC– und gegebenenfalls auch SiC– gebundene organische Reste enthaltendem Polysiloxan mit Borsäureanhydrid, nachdem diesem Umsetzungsprodukt die gewünschte Form gegeben wurde, der Einwirkung von Wasserdampf, wobei der in normaler Luft enthaltene Wasserdampf ausreicht, ausgesetzt wird.

EP 0 078 044 A1

0078044

W A C K E R - C H E M I E
G M B H

München, den 22.9.1981
Dr.Ru/rei

Wa 8104-S

# Verfahren zur Herstellung von festen Gebilden aus Umsetzungsprodukten von organischen Siliciumverbindungen mit Borverbindungen

Feste Gebilde, also Formkörper, Überzüge oder Füllungen von Hohlräumen, werden in großem Umfang mittels Bindemitteln hergestellt. Bindemittel-Zusammensetzungen, die Umsetzungsprodukte von organischen Siliciumverbindungen, z.B. einem Alkylsilikat, mit Borverbindungen, z.B. einem Alkylborat, enthalten, sind bereits bekannt. Hierzu wird auf z.B. US 3 392 036, ausgegeben 9. Juli 1968, G.P. McLeod, Stauffer Chemical Company, verwiesen. Die erfindungsgemäß eingesetzten Umsetzungsprodukte haben insbesondere die überraschenden Eigenschaften, daß sie nach der Formgebung rascher vernetzen und daß sie, wenn sie vor der Vernetzung flüssig sind, im Gegensatz zu den Umsetzungsprodukten vergleichbarer Art, die bisher bekannt sind, in verschlossenen Gefäßen beliebig lang haltbar sind.

Gegenstand der Erfindung ist ein Verfahren zur Herstellung von festen Gebilden aus Umsetzungsprodukten von organischen Siliciumverbindungen mit Borverbindungen, dadurch gekennzeichnet, daß das Umsetzungsprodukt von mindestens 3 Siliciumatome je Molekül sowie SiOC- und gegebenenfalls auch SiC- gebundene organische Reste enthaltendem Polysiloxan mit Borsäureanhydrid, nachdem diesem Umsetzungsprodukt die gewünschte Form gegeben wurde, der Einwirkung von Wasserdampf ausgesetzt wird.

Aus US 3 422 027, ausgegeben 14. Januar 1969, Elemer Domba, Nalco Chemical Company, ist bereits ein Verfahren zur Her-

BAD ORIGINAL

stellung erfindungsgemäß verwendbarer Umsetzungsprodukte bekannt. Diese Druckschrift erwähnt jedoch als Verwendung solcher Produkte lediglich diejenige der Schaumbekämpfung. Keine Stelle dieser Druckschrift legt eine Verwendung der Produkte zur Herstellung harter Gebilde nahe.

Vorzugsweise werden zur Herstellung der erfindungsgemäß verwendeten Umsetzungsprodukte als mindestens 3 Siliciumatome je Molekül sowie SiOC- und gegebenenfalls auch SiC-gebundene organische Reste enthaltende Polysiloxane solche eingesetzt, die aus Einheiten der allgemeinen Formel

$$R_a\ Si\ (OR')_b\ O_{\frac{4-a-b}{2}}$$

aufgebaut sind. In dieser Formel bedeutet R gleiche oder verschiedene, gegebenenfalls substituierte Kohlenwasserstoffreste, R' gleiche oder verschiedene aliphatische Kohlenwasserstoffreste oder Wasserstoff, mit der Maßgabe, daß höchstens 5 Gewichtsprozent, bezogen auf das Gewicht vom jeweils eingesetzten Polysiloxan, an Si-gebundenen Hydroxylgruppen vorhanden sind, a ist 0, 1, 2 oder 3, b ist 0, 1, 2 oder 3 und durchschnittlich 0,1 bis 2,5 und die Summe von a + b ist durchschnittlich 1 bis 2,8.

Vorzugsweise enthalten die aliphatischen Kohlenwasserstoffreste R', also SiOC- gebundene organische Reste, 1 bis 6 Kohlenstoffatome je Rest. Beispiele für solche aliphatische Kohlenwasserstoffreste R' sind Alkylreste, wie der Methyl-, Ethyl-, n-Propyl- und Isopropylrest sowie Butyl-, Pentyl- und Hexylreste; Cycloalkylreste, wie der Cyclohexylrest und Alkenylreste, wie der Allyl- und Isopropenylrest. Wegen der leichteren Zugänglichkeit sind als Reste R' der Methyl- und der Ethylrest bevorzugt.

Vorzugsweise enthalten die gegebenenfalls substituierten Kohlenwasserstoffreste R, also SiC-gebundene organische Reste, 1 bis 10 Kohlenstoffatome je Molekül. Die Beispiele für Koh-

BAD ORIGINAL

lenwasserstoffreste R' gelten in vollem Umfang auch für Kohlenwasserstoffreste R. Weitere Beispiele für Kohlenwasserstoffreste sind Alkylreste mit 7 bis 10 Kohlenstoffatomen, wie Heptyl- und Decylreste; der Vinylrest; Arylreste, wie der Phenylrest und Xenylreste; Alkarylreste, wie Tolylreste und Aralkylreste, wie der ß-Phenylethylrest.

Beispiele für substituierte Kohlenwasserstoffreste R sind halogenierte Kohlenwasserstoffreste, wie der 3,3,3-Trifluorpropylrest und o-, m- und p-Chlorphenylreste und Reste mit -COOC-Gruppierungen, wie der gamma-Methacryloxypropylrest.

Wegen der leichteren Zugänglichkeit sind jedoch vorzugsweise mindestens 80 % der Anzahl der SiC-gebundenen organischen Reste Methylreste.

Vorzugsweise enthalten die zur Herstellung der erfindungsgemäß verwendeten Umsetzungsprodukte eingesetzten Polysiloxane höchstens 0,6 Gewichtsprozent, bezogen auf ihr Gewicht, an Si-gebundenen Hydroxylgruppen. Obwohl gemäß US 3 422 027 Polyethylsilikate mit mindestens 2 Gewichtsprozent Si-gebundener Hydroxylgruppen am meisten bevorzugt sind, wurde nämlich gefunden, daß die Umsetzung der SiOC-gebundene und gegebenenfalls auch SiC-gebundene organische Reste enthaltenden Polysiloxane mit Borsäureanhydrid bei umso niedrigeren Temperaturen und umso rascher verläuft je niedriger der Anteil der Si-gebundenen Hydroxylgruppen am Gewicht der Polysiloxane ist. Um den Anteil der Si-gebundenen Hydroxylgruppen am Gewicht der Polysiloxane zu vermindern, können die zur Herstellung der erfindungsgemäß verwendeten Umsetzungsprodukte eingesetzten Polysiloxane vor oder gleichzeitig oder nach der Zugabe des Borsäureanhydrids mit einem Mittel zur Verringerung des Anteils Si-gebundener Hydroxylgruppen, das rascher als Borsäureanyhdrid den Anteil Si-gebundener Hydroxylgruppen verringert, vermischt werden. Beispiele für solche Mittel sind Titantetrabutylat und dessen Teilhydro-

BAD ORIGINAL

lysate sowie organische Zinnverbindungen, wie Dibutylzinndilaurat. Vorzugsweise werden Mittel zur Verringerung des Anteils Si-gebundener Hydroxylgruppen, die rascher als Borsäureanhydrid den Anteil Si-gebundener Hydroxylgruppen verringern, in Mengen von 0,5 bis 5 Gewichtsprozent, bezogen auf das Gewicht vom Polysiloxan, eingesetzt.

Borsäureanhydrid ($B_2O_3$) wird bei der Herstellung der erfindungsgemäß verwendeten Umsetzungsprodukte vorzugsweise in Mengen von 0,1 bis 30 Gewichtsprozent, bezogen auf das Gewicht der jeweils eingesetzten Menge an Polysiloxan, eingesetzt. Sollen die erfindungsgemäß verwendeten Umsetzungsprodukte flüssig sein, wird Borsäureanhydrid vorzugsweise in Mengen von 0,1, insbesondere 0,5 bis 8 Gewichtsprozent, bezogen auf das Gewicht der jeweils eingesetzten Menge an Polysiloxan, eingesetzt.

Die Umsetzung von mindestens 3 Siliciumatome je Molekül sowie SiOC- und gegebenenfalls auch SiC-gebundene organische Reste enthaltendem Polysiloxan mit Borsäureanhydrid wird vorzugsweise bei 0 bis 150°C, insbesondere 15 bis 70°C, durchgeführt. Ein nachträgliches Erwärmen auf 200°C und die Mitverwendung von pyrogen erzeugtem Siliciumdioxid, wie in US 3 422 027 beschrieben, ist keineswegs erforderlich, aber auch nicht ausgeschlossen. Ebenso ist ein Abdestillieren von Alkanol, wie in US 3 422 027 beschrieben, nicht erforderlich, wenn der Anteil der Si-gebundenen Hydroxylgruppen am Gewicht der Polysiloxane höchstens 0,6 Gewichtsprozent, bezogen auf das Gewicht der Polysiloxane, ist. Dann wird nämlich kein Alkanol oder kein Alkanol in merklichen Mengen bei der Umsetzung gebildet.

Die Umsetzung von mindestens 3 Siliciumatome je Molekül sowie SiOC- und gegebenenfalls auch SiC-gebundene organische Reste enthaltendem Polysiloxan mit Borsäureanhydrid wird vorzugsweise beim Druck der umgebenden Atmosphäre, also bei

1013 mbar (abs.) oder etwa 1013 mbar (abs.) durchgeführt. Falls erwünscht können aber auch höhere oder niedrigere Drücke angewendet werden.

Vorzugsweise wird bei der Herstellung der erfindungsgemäß verwendeten Umsetzungsprodukte der Zutritt von Wasser und Alkanol zu dem Gemisch der Reaktionsteilnehmer ausgeschlossen.

Die Mitverwendung von Lösungsmitteln, die frei von Hydroxylgruppen sind, wie Toluol, ist nicht erforderlich, aber auch nicht ausgeschlossen.

Die Umsetzung ist beendet, wenn die gesamte Menge an Borsäureanhydrid in Lösung gegangen ist bzw. sich ein fester Körper gebildet hat.

Bei der Herstellung der erfindungsgemäßen Umsetzungsprodukte kann das Gemisch der Reaktionsteilnehmer Füllstoffe oder Pigmente, wie Sand, Quarzmehl, Zinkstaub oder Aluminiumpulver, enthalten. Wenn die Umsetzungsprodukte flüssig sind, können solche Füllstoffe oder Pigmente aber auch in die Umsetzungsprodukte eingemischt werden.

Für die Erzeugung fester Gebilde aus den erfindungsgemäß verwendeten Umsetzungsprodukten genügt die Einwirkung von Wasserdampf, der üblicherweise in der Luft enthalten ist. Falls erwünscht, kann zusätzlicher Wasserdampf eingesetzt werden.

Das erfindungsgemäße Verfahren kann zur Herstellung von Formkörpern, wie Gießkernen für den Metallguß oder feuerfesten Blöcken, angewendet werden.

Weiterhin kann das erfindungsgemäße Verfahren zur Herstellung von Überzügen, z.B. auf Metallen, verwendet werden.

Schließlich kann das erfindungsgemäße Verfahren auch zur Herstellung von Füllungen von Hohlräumen, z.B. zum Abdichten von Fugen von Gebäuden, verwendet werden.

In den folgenden Beispielen beziehen sich alle Angaben von Teilen auf das Gewicht.

Beispiel 1

a) 100 Teile handelsübliches Polyethylsilikat mit einem $SiO_2$-Gehalt von 40 Gewichtsprozent

$$\left( \frac{= \text{Gewicht der Asche} \cdot 100}{\text{Gewicht vom Polyethylsilikat vor Veraschung}} \right),$$

das unter der Bezeichnung "TES 40" bei der Wacker-Chemie GmbH D-8000 München erhältlich ist und aus Einheiten der durchschnittlichen Formel

$$Si\,(OR'')_{2,33}\,O_{\frac{1,67}{2}}$$

aufgebaut ist, wobei soviel der R" Wasserstoffatome bedeuten, daß der Anteil der Si-gebundenen Hydroxylgruppen etwa 0,3 bis 0,6 Gewichtsprozent beträgt, während der Rest der R" aus Ethylgruppen besteht, werden bei Raumtemperatur im Gemisch mit 5 Teilen Borsäureanhydrid gerührt, bis sich das Borsäureanhydrid gelöst hat. Die so erhaltene Flüssigkeit wird filtriert. Im Filtrat sind mittels NMR- und Infrarotspektrum SiOB-Bindungen aber weder Borsäure noch Borsäureanhydrid nachweisbar.

b) 100 Teile des Filtrats, dessen Herstellung oben unter a) beschrieben wurde, werden mit 100 Teilen Xylol, 700 Teilen Zinkstaub, 12 Teilen pyrogen erzeugtem Siliciumdioxid, dessen Oberfläche etwa 150 $g/m^2$ beträgt und Trimethylsiloxygruppen aufweist, und 30 Teilen feingemahlenem Talkum ("Microtalkum") vermischt. Die so erhaltene Zinkfarbe wird auf ein Stahlblech aufgetragen und härtet bei 25°C und 50 Gewichtsprozent relativem Wassergehalt ("Luftfeuchte") der Luft innerhalb von 3 Stunden zu einem dichten, ausgezeich-

net haftenden und lösungsmittelfesten Überzug aus. Die gleichen Ergebnisse werden auch nach 14-tägiger Lagerung der Zinkfarbe bei 70°C in einem verschlossenen Behälter vor dem Auftragen auf das Stahlblech beobachtet. Bei solcher Lagerung werden keine gelierten Anteile gebildet und die Verarbeitbarkeit der Farbe ist noch so gut wie ohne Lagerung.

Beispiel 2

a) Ein Gemisch aus 100 Teilen eines Polysiloxans aus Einheiten der durchschnittlichen Formel

$$CH_3\,Si\,(OC_2H_5)_{0,6}\,O_{1,2}$$

mit einer Viskosität von 25 $mm^2 \cdot s^{-1}$ bei 20°C und 4 Teilen Borsäureanhydrid wird bei 70°C gerührt, bis eine schwach trübe Lösung entstanden ist. Nach dem Filtrieren beträgt die Viskosität des so erhaltenen Umsetzungsprodukts 60 $mm^2 \cdot s^{-1}$.

b) 100 Teile des Umsetzungsprodukts, dessen Herstellung vorstehend unter a) beschrieben wurde, werden mit 100 Teilen eines handelsüblichen Gemisches von Xylolisomeren vermischt. Die so erhaltene Lösung wird auf Aluminiumblech aufgetragen und härtet bei 25°C innerhalb von 24 Stunden zu einem festhaftenden, lösungsmittelfesten Überzug.

Beispiel 3

100 Teile des in Beispiel 2 näher beschriebenen Polysiloxans werden bei Raumtemperatur mit 25 Teilen Borsäureanhydrid geschüttelt. Innerhalb von 20 Minuten erstarrt die Mischung zu einem Gel, das sich unter der Einwirkung des Wasserdampfs der Luft innerhalb einiger Stunden zu einem harten Körper verfestigt.

Beispiel 4

a) Ein Gemisch aus 100 Teilen Polyethylsilikat, das aus Einheiten der durchschnittlichen Formel

$$Si\,(OR^1)_{2,2}\,O_{\frac{1,8}{2}}$$

aufgebaut ist, wobei soviel der $R^1$ Wasserstoffatome bedeuten, daß der Anteil der Si-gebundenen Hydroxylgruppen etwa 0,8 Gewichtsprozent beträgt, während der Rest der $R^1$ aus Ethylgruppen besteht, 3 Teilen Titanbutylat und 3 Teilen Borsäureanhydrid wird bei 20°C gerührt, bis sich das Borsäureanhydrid gelöst hat. Das so erhaltene Umsetzungsprodukt wird mit 400 Teilen Zinkstaub vermischt. Die so erhaltene Zinkfarbe wird auf sandgestrahltes Eisenblech gespritzt. Der so erhaltene Überzug härtet innerhalb von 3 Stunden zu einem lösungsmittelfesten Überzug aus.

P a t e n t a n s p r ü c h e :

1. Verfahren zur Herstellung von festen Gebilden aus Umsetzungsprodukten von organischen Siliciumverbindungen mit Borverbindungen,
d a d u r c h g e k e n n z e i c h n e t,
daß das Umsetzungsprodukt von mindestens 3 Siliciumatome je Molekül sowie SiOC- und gegebenenfalls auch SiC-gebundene organische Reste enthaltendem Polysiloxan mit Borsäureanhydrid, nachdem diesem Umsetzungsprodukt die gewünschte Form gegeben wurde, der Einwirkung von Wasserdampf ausgesetzt wird.

2. Verfahren nach Anspruch 1,
d a d u r c h g e k e n n z e i c h n e t,
daß zur Herstellung des Umsetzungsproduktes als Polysiloxan solches aus Einheiten der allgemeinen Formel

$$R_a\,Si\,(OR')_b\,O_{\frac{4-a-b}{2}}$$

eingesetzt wurde, wobei R gleiche oder verschiedene, gegebenenfalls substituierte Kohlenwasserstoffreste, R' gleiche oder verschiedene aliphatische Kohlenwasserstoffreste oder Wasserstoff bedeutet, mit der Maßgabe, daß höchstens 5 Gewichtsprozent, bezogen auf das Gewicht vom jeweils eingesetzten Polysiloxan, an Si-gebundenen Hydroxylgruppen vorhanden sind, a 0, 1, 2 oder 3, b 0, 1, 2 oder 3 und durchschnittlich 0,1 bis 2,5 und die Summe von a + b durchschnittlich 1 bis 2,8 ist.

3. Verfahren nach Anspruch 1 oder 2,
d a d u r c h g e k e n n z e i c h n e t,
daß zur Herstellung des Umsetzungsproduktes als Polysiloxan solches mit höchstens 0,6 Gewichtsprozent, bezogen auf das Gewicht des Polysiloxans, an Si-gebundenen Hydroxylgruppen eingesetzt wurde.

BAD ORIGINAL

4. Verfahren nach mindestens einem der Ansprüche 1 bis 3, dadurch gekennzeichnet, daß zur Herstellung des erfindungsgemäß verwendeten Umsetzungsproduktes Borsäureanhydrid in Mengen von 0,1 bis 30 Gewichtsprozent, bezogen auf das Gewicht der jeweils eingesetzten Menge an Polysiloxan, eingesetzt wurde.

5. Verfahren nach Anspruch 4, dadurch gekennzeichnet, daß zur Herstellung des erfindungsgemäß verwendeten Umsetzungsproduktes Borsäureanhydrid in Mengen von 0,5 bis 8 Gewichtsprozent, bezogen auf das Gewicht der jeweils eingesetzten Menge an Polysiloxan, eingesetzt wurde.

Europäisches Patentamt

**EUROPÄISCHER RECHERCHENBERICHT**

0078044

Nummer der Anmeldung

EP 82 10 9824

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | US-A-3 415 778 (A.J. PURZINSKI) * Ansprüche 1,3; Spalte 11, Zeilen 52-72; Spalte 12, Zeilen 70-75; Spalte 13, Zeilen 1-5, 14-39 * | 1-5 | C 08 G 77/56<br>C 08 G 77/38<br>C 08 L 83/04 |
| A | DE-B-1 153 976 (BAYER) * Anspruch; Spalte 3, Zeilen 15-18 * | 1 | |
| A | US-A-3 350 344 (M.D. BEERS) * Ansprüche 1-5 * | 1 | |
| A | GB-A-1 180 764 (GENERAL ELECTRIC) * Ansprüche 1-4; Seite 1, Zeilen 10-20; Seite 2, Zeilen 5-11 * | 1 | RECHERCHIERTE SACHGEBIETE (Int. Cl. 3) |
| A | GB-A-2 022 602 (RESEARCH INST. FOR SPECIAL INORGANIC MATERIAL) * Anspruch 1 * | 1 | C 08 G<br>C 08 L |

Der vorliegende Recherchenbericht wurde für alle Patentansprüche erstellt.

| Recherchenort | Abschlußdatum der Recherche | Prüfer |
|---|---|---|
| DEN HAAG | 19-01-1983 | DEPIJPER R.D.C. |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument